# EUROPÄISCHE PATENTANMELDUNG

(11) **EP 3 270 488 A1**
(43) Veröffentlichungstag der Anmeldung: **17.01.2018**
(21) Anmeldenummer: 16179483.9
(22) Anmeldetag: 14.07.2016
(51) Int. Cl.: H02K 1/08

(54) **ROTOR FÜR EINE ELEKTRISCHE ROTIERENDE MASCHINE**

(71) Anmelder: Siemens Aktiengesellschaft, 80333 München (DE)
(72) Erfinder: Festa, Marco, 14612 Falkensee (DE); Centner, Matthias, 10555 Berlin (DE); Sabelfeld, Ilja, 10119 Berlin (DE)

(57) **Zusammenfassung**

Die Erfindung betrifft einen Rotor (3) für eine elektrische rotierende Maschine (1), insbesondere eine Synchronmaschine (1a), mit einer um eine Rotationsachse (4) rotierbare Welle (5) und mindestens einem Polschuh (7). Um ein verbessertes Schwingungsverhalten zu erreichen, wird vorgeschlagen, dass der Polschuh (7) einen Polschuhkörper (8) und ein Polschuhblech (9) aufweist, wobei das Polschuhblech (9) auf einer radial äußeren Oberfläche (8a) des Polschuhkörpers (8) aufliegt.

## Beschreibung

Die Erfindung betrifft einen Rotor für eine elektrische rotierende Maschine, insbesondere eine Synchronmaschine, mit einer um eine Rotationsachse rotierbare Welle und mindestens einem Polschuh.

Darüber hinaus betrifft die Erfindung eine elektrische rotierende Maschine, insbesondere eine Synchronmaschine, mit einem derartigen Rotor.

Die Erfindung betrifft ferner ein Verfahren zur Herstellung eines derartigen Rotors.

Ein derartiger Rotor kommt insbesondere bei direktanlaufenden Synchron-Schenkelpolmaschinen mit aufgesetzten Polschuhen zum Einsatz. Aufgesetzte Polschuhe kommen im Wesentlichen bei Großantrieben mit einer Leistung von mindestens 1 Megawatt vor.

Ein direkter Anlauf ist ein mitunter kostengünstiges Verfahren, einen Anlauf am Netz zu realisieren, wobei die Synchronmaschine asynchron angefahren und in der Nähe der Synchrondrehzahl in den synchronen Betrieb versetzt wird. Bei einem asynchronen Anlauf muss der Läufer so gestaltet sein, dass die für den Anlauf notwendigen Ströme fließen können, wobei Rotoren mit massiven Polen die Leitfähigkeit der Poloberfläche nutzen können.

Beim asynchronen Anlauf einer Synchron-Schenkelpolmaschine werden Wirbelströme in die aufgesetzten Polschuhe induziert, wobei insbesondere die Oberfläche der Polschuhe durch magnetische Wechselfelder, insbesondere durch Wirbelströme, stark aufgeheizt werden. Bei großen Synchronmaschinen mit einer Leistung von mindestens 1 Megawatt wird darüber hinaus gefordert, dass sie bei einem definierten Gegenmoment anlaufen können. Bei einem derartigen Gegenmoment können an den Oberflächen der Polschuhe Temperaturen von mehreren hundert Grad Celsius auftreten.

Hervorgerufen durch eine hohe Temperaturdifferenz zwischen einem Polschuh und einem Polschaft können große Scherkräfte an einer Trennfuge zwischen Polschuh und Polschaft auftreten. Ein derartig hoher Temperaturunterschied zwischen einer Unterseite und einer Oberseite des Polschuhs führt zu einer Verformung, insbesondere Aufwölbung, des Polschuhs. Da die Verformung durch von elektromagnetischen Wechselfeldern oder Wirbelströmen erzeugten Temperaturdifferenzen verursacht wird, spricht man von einer elektromagnetisch induzierten thermischen Verformung. Durch eine derartige elektromagnetisch induzierte thermische Verformung können sich der Polschuh und der Polschaft relativ zueinander bewegen. Die mit der Verformung und Verschiebung einhergehenden Masseverschiebungen des Polschuhs wirken sich negativ auf den Wuchtzustand des Rotors und damit auf das Schwingungsverhalten aus.

Der Erfindung liegt die Aufgabe zugrunde, einen Rotor für eine elektrische rotierende Maschine anzugeben, welcher, im Vergleich zum Stand der Technik, ein verbessertes Schwingungsverhalten aufweist.

Die Aufgabe wird durch einen Rotor für eine elektrische rotierende Maschine, insbesondere eine Synchronmaschine, mit einer um eine Rotationsachse rotierbare Welle und mindestens einem Polschuh gelöst, wobei der Polschuh einen Polschuhkörper und Polschuhblech aufweist, wobei das Polschuhblech auf einer radial äußeren Oberfläche des Polschuhkörpers aufliegt.

Die Aufgabe wird darüber hinaus durch eine elektrische rotierende Maschine, insbesondere eine Synchronmaschine, mit einem derartigen Rotor gelöst.

Ferner wird die Aufgabe durch ein Verfahren zur Herstellung eines derartigen Rotors gelöst.

Die in Bezug auf den Rotor nachstehend angeführten Vorteile und bevorzugten Ausgestaltungen lassen sich sinngemäß auf die elektrische rotierende Maschine und das Herstellungsverfahren übertragen.

Die Erfindung basiert auf der Idee das Schwingungsverhalten des Rotors zu verbessern, indem man ein Polschuhblech auf der radial äußeren Oberfläche des Polschuhkörpers befestigt. Die radial äußere Oberfläche des Polschuhkörpers ist die Oberfläche, welche im Betrieb des Rotors in einer elektrischen rotierenden Maschine an einen Spalt zwischen dem Rotor und einem Stator angrenzt. Beispielsweise bei einem asynchronen Anlauf entstehende Wirbelströme fließen zumindest zu einem großen Teil im Polschuhblech, welches sich durch die Wirbelströme erwärmt und ausdehnt. Die Ausdehnung bewirkt lediglich eine elastische Verformung des Polschuhblechs. Die radial äußere Oberfläche des Polschuhkörpers erhitzt sich kaum, weswegen keine signifikante elektromagnetisch induzierte thermische Verformung des Polschuhkörpers auftritt.

In einer bevorzugten Ausführungsform ist das Polschuhblech an mehreren Verbindungspunkten, insbesondere über Verbindungselemente und/oder über eine stoffschlüssige Verbindung, mit dem Polschuhkörper verbunden. Verbindungselemente, insbesondere lösbare Verbindungselemente sind beispielsweise Schrauben. Eine stoffschlüssige Verbindung ist insbesondere eine Schweißverbindung. Durch eine derartige punktuelle Verbindung ist das Polschuhblech mit dem Polschuhkörper mechanisch und elektrisch leitend verbunden. Durch die punktuelle Verbindung wird ein Temperaturausgleich zwischen dem Polschuhblech und dem Polschuhkörper erschwert.

In einer weiteren vorteilhaften Ausgestaltung ist das Polschuhblech zwischen den Verbindungspunkten zumindest in axiale Richtung flexibel ausgebildet. Unter einer flexiblen Ausbildung ist zu verstehen, dass das Polschuhblech beweglich, gleitfähig und/oder verformbar auf der Oberfläche des Polschuhs angeordnet ist. Durch diese flexible Ausbildung kann sich das Polschuhblech, insbesondere zwischen den Verbindungspunkten, unabhängig vom Polschuhkörper, beispielsweise durch wirbelstrominduziertes Erhitzen, verformen.

Bei einer bevorzugten Ausgestaltung weist das Polschuhblech eine Profilierung auf. Unter einer Profilierung sind, bezogen auf eine Bezugsebene, Erhöhungen und/oder Vertiefungen, insbesondere Wölbungen und/oder Rillen, auf dem Polschuhblech und/oder Aussparungen, insbesondere Schlitze, im Polschuhblech zu verstehen. Durch eine derartige Profilierung können die mechanischen und elektrischen Eigenschaften des Polschuhblechs gezielt beeinflusst werden.

Auf vorteilhafte Weise ist die Profilierung zumindest teilweise gewölbt ausgebildet. Unter einer Wölbung ist, bezogen auf eine Bezugsebene, eine Erhöhung oder eine Vertiefung zu verstehen, wobei insbesondere die Länge oder die Breite der Wölbung signifikant größer ist als die Tiefe der Wölbung. Durch derartige Wölbungen ist das Polschuhblech leichter und gezielter verformbar.

Bevorzugt weist die Profilierung Schlitze und/oder Löcher auf, wobei die Schlitze zumindest in axiale Richtung verlaufen. Löcher sind kreisförmige, ovale, quadratische oder rechteckige Aussparungen im Polschuhblech. Schlitze sind längliche geradlinige oder gekrümmte Aussparungen im Polschuhblech. Löcher und Schlitze, werden beispielsweise durch Stanzen, Laserschneiden, Fräsen, Bohren oder Wasserstrahlschneiden hergestellt. Durch derartige Löcher oder Schlitze wird die mittlere Leitfähigkeit des Polschuhblechs verringert, was zur Beeinflussung des Anlaufdrehmoments genutzt werden kann. Weiterhin können durch derartige Löcher oder Schlitze Wirbelströme zumindest verringert werden.

Vorzugsweise weist die Profilierung Rillen auf. Unter einer Rille ist, bezogen auf eine Bezugsebene, eine Erhöhung oder eine Vertiefung zu verstehen, wobei insbesondere die Breite der Rille kleiner ist als die Tiefe der Rille. Eine derartige Rille versteift das Blech in Richtung des Verlaufs der Rille. Darüber hinaus ist das Polschuhblech leichter und gezielter, insbesondere senkrecht zum Verlauf der Rille, verformbar.

Auf besonders vorteilhafte Weise liegt das Polschuhblech vollflächig auf der radial äußeren Oberfläche des Polschuhkörpers auf. Insbesondere ist das Polschuhblech im Wesentlichen an die Kontur der radial äußeren Oberfläche des Polschuhkörpers angepasst. Dadurch werden auf optimale Weise Wirbelströme auf dem Polschuhkörper zumindest reduziert.

Bevorzugt ist das Polschuhblech aus einem weichmagnetischen Material ausgebildet. Insbesondere besteht das Polschuhblech aus einem Stahl, aus Eisen, Nickel oder Cobalt. Durch die Verwendung eines weichmagnetischen Materials bleibt die effektive Weite des Spalts zwischen dem Rotor und dem Stator, im Vergleich zur Ausgestaltung ohne das Polschuhblech, unverändert, insbesondere wenn die radiale Höhe des Polschuhkörpers um die Blechdicke reduziert wird. Daher wird durch die Verwendung eines weichmagnetischen Materials für das Polschuhblech eine optimale Leistung und Effizienz der elektrischen rotierenden Maschine gewährleistet.

Zweckdienlicherweise weist das Polschuhblech eine Dicke im Bereich von 1 mm bis 10 mm auf. Insbesondere wenige Millimeter genügen, dass ein großer Anteil der thermischen Verluste im Polschuhblech stattfindet. Eine derartige Dicke des Anlaufbleches stellt erfahrungsgemäß das Optimum aus Wirksamkeit und technologischer Machbarkeit dar.

In einer vorteilhaften Ausgestaltung umfasst das Polschuhblech mindestens zwei geschichtete Einzelbleche. Durch die Verwendung mehrerer übereinander angeordneter Bleche können insgesamt dickere Blechschichten realisiert werden, während eine hohe Flexibilität erhalten bleibt.

Im Folgenden wird die Erfindung anhand der in den Figuren dargestellten Ausführungsbeispiele näher beschrieben und erläutert.

Es zeigen:
- FIG 1: einen Querschnitt einer elektrischen rotierenden Maschine,
- FIG 2: einen vergrößerten Längsschnitt eines Rotors im Bereich eines Polschuhs mit einer ersten Ausführungsform eines Polschuhblechs,
- FIG 3: eine Draufsicht einer ersten Ausführungsform eines Polschuhblechs,
- FIG 4: eine Draufsicht einer zweiten Ausführungsform eines Polschuhblechs,
- FIG 5: einen vergrößerten Längsschnitt eines Rotors im Bereich eines Polschuhs mit einer dritten Ausführungsform eines Polschuhblechs,
- FIG 6: einen vergrößerten Längsschnitt eines Rotors im Bereich eines Polschuhs mit einer vierten Ausführungsform eines Polschuhblechs,
- FIG 7: einen vergrößerten Längsschnitt eines Rotors im Bereich eines Polschuhs mit einer fünften Ausführungsform eines Polschuhblechs,
- FIG 8: einen vergrößerten Längsschnitt eines Rotors im Bereich eines Polschuhs mit einer sechsten Ausführungsform eines Polschuhblechs und
- FIG 9: einen vergrößerten Ausschnitt eines Rotors im Bereich eines Befestigungspunktes mit einer siebten Ausführungsform eines Polschuhblechs.

Gleiche Bezugszeichen haben in den verschiedenen Figuren die gleiche Bedeutung.

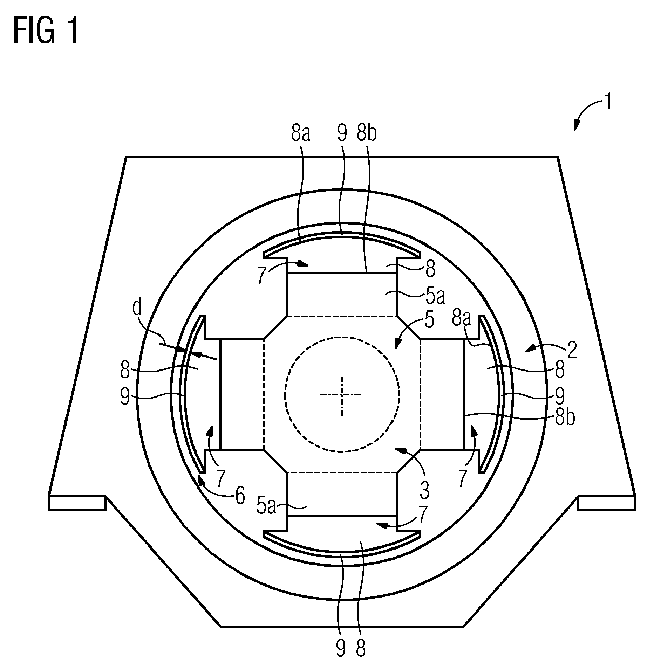

FIG 1 zeigt einen Querschnitt einer elektrischen rotierenden Maschine 1, welche als direktanlaufende Synchronmaschine 1a ausgeführt ist. Die direktanlaufende Synchronmaschine 1a ist mit einer Leistung von mindestens 1 Megawatt betreibbar. Sie weist einen Stator 2 und einen um eine Rotationsachse 4 rotierbaren Rotor 3 auf. Der Stator 2 ist um den Rotor 3 herum angeordnet, wobei sich zwischen dem Stator 2 und dem Rotor 3 ein Spalt 6 befindet. Der Spalt 6 ist als Luftspalt ausgebildet, es können sich aber auch andere Fluide im Spalt 6 zwischen dem Stator 2 und dem Rotor 3 befinden. Die Spulen des Stators 2 und des Rotors 3 sind aus Gründen der Übersichtlichkeit nicht dargestellt. Die Synchronmaschine 1a kann auch ohne Spulen als Synchron-Reluktanzmaschine ausgeführt sein.

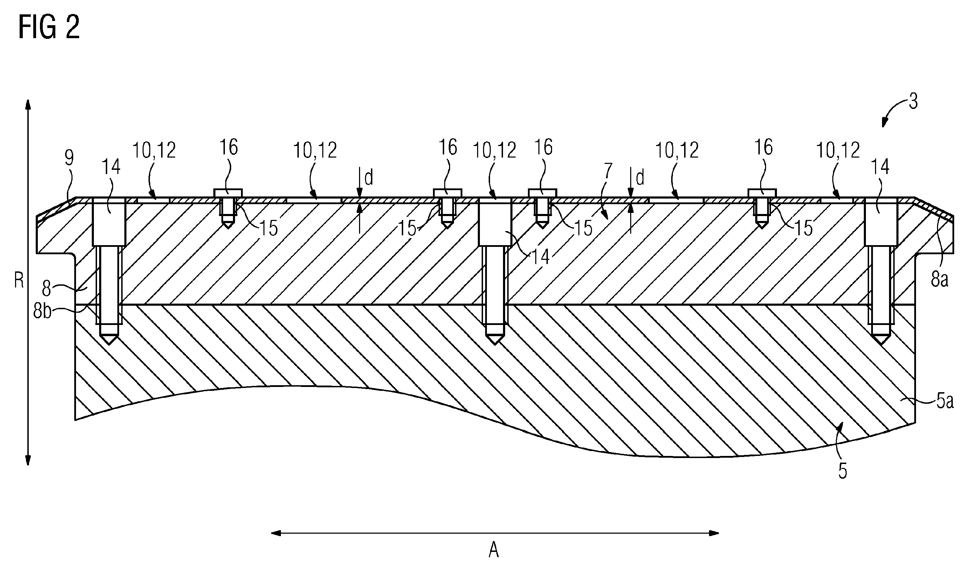

Der Rotor 3 der direktanlaufenden Synchronmaschine 1a weist eine Welle 5 mit exemplarisch vier orthogonal angeordneten Polschäften 5a auf, wobei die Polschäfte 5a jeweils mit Polschuhen 7 versehen sind. Die Welle 5 besteht zumindest hauptsächlich aus einem als Vollmaterial ausgeführten weichmagnetischen Stahl, insbesondere aus einem Vergütungsstahl. Die Polschuhe 7 werden mit Hilfe von Polschuhschrauben 14 (siehe FIG 2) auf die Welle 5 geschraubt. Die Polschuhschrauben 14 sind aus Gründen der Übersichtlichkeit in FIG 1 nicht dargestellt.

Jeder Polschuh 7 umfasst einen Polschuhkörper 8, welcher eine radial äußere Oberfläche 8a und eine radial innere Oberfläche 8b aufweist, und ein Polschuhblech 9. Die radial innere Oberfläche 8b des Polschuhkörpers 8 liegt auf einem Polschaft 5a der Welle 5 auf. Auf der radial äußeren Oberfläche 8a liegt das Polschuhblech 9 auf, welches unmittelbar an den Spalt 6 angrenzt. Der Polschuhkörper 8 besteht zumindest hauptsächlich aus einem als Vollmaterial ausgeführten weichmagnetischen Stahl, insbesondere aus einem Vergütungsstahl. Das Polschuhblech 9 weist eine Dicke d im Bereich von 1 mm bis 10 mm auf und besteht aus einem weichmagnetischen Material insbesondere einem weichmagnetischen Stahl. Das Polschuhblech 9 kann auch aus unterschiedlichen Materialien bestehen, um beispielsweise die Leitfähigkeit gezielt lokal zu beeinflussen. Darüber hinaus kann das Polschuhblech 9 auch mehrere geschichtete Einzelbleche umfassen, welche aus demselben oder unterschiedlichen Materialien bestehen. Bei Verwendung mehrerer übereinander angeordneter Bleche können insgesamt dickere Blechschichten realisiert werden, während eine hohe Flexibilität erhalten bleibt.

FIG 2 zeigt einen vergrößerten Längsschnitt eines Rotors 3 im Bereich eines Polschuhs 7 mit einer ersten Ausführungsform eines Polschuhblechs 9. Der Polschuhkörper 8 des Polschuhs 7 liegt auf einem Polschaft 5a der Welle 5 auf und ist mit dem Polschaft 5a über mehrere Polschuhschrauben 14 befestigt. Der Polschuhkörper 8 kann auch auf eine andere Weise, beispielsweise mit Hilfe einer stoffschlüssigen Verbindung, insbesondere Schweißverbindung, mit dem Polschaft 5a verbunden werden. Das Polschuhblech 9 liegt auf dem Polschuhkörper 8 auf und ist mit diesem an mehreren Verbindungspunkten 15 mit Hilfe von Verbindungselementen 16, insbesondere Schrauben, verbunden. Das Polschuhblech 9 kann alternativ oder zusätzlich über Verbindungselemente 16 durch den Polschuhkörper 8 direkt mit dem Polschaft 5a verbunden werden. Darüber hinaus kann das Polschuhblech 9 an den Verbindungspunkten 15 alternativ oder zusätzlich über eine stoffschlüssige Verbindung 17, insbesondere eine punktuelle Schweißverbindung, mit dem Polschuhkörper 8 verbunden werden.

Das Polschuhblech 9 weist eine Profilierung 10 in Form von Schlitzen 12 auf, welche insbesondere in axiale Richtung A zwischen den Verbindungspunkten 15 verlaufen. Zumindest ein Teil der Schlitze 12 kann auch als weitere Aussparungen, insbesondere als Löcher ausgeführt sein. Schlitze 12 und Bohrungen werden beispielsweise durch Stanzen, Laserschneiden, Fräsen, Bohren oder Wasserstrahlschneiden hergestellt. Auch eine Kombination dieser Herstellungsverfahren ist Gegenstand der Erfindung. Durch derartige Schlitze 12 oder Bohrungen wird die mittlere Leitfähigkeit des Polschuhblechs 9 verändert, insbesondere lokal verringert, was zur Beeinflussung des Anlaufdrehmoments genutzt werden kann. Weiterhin kann durch derartige Schlitze 12 oder Löcher die Ausbreitung von Wirbelströmen zumindest verringert werden.

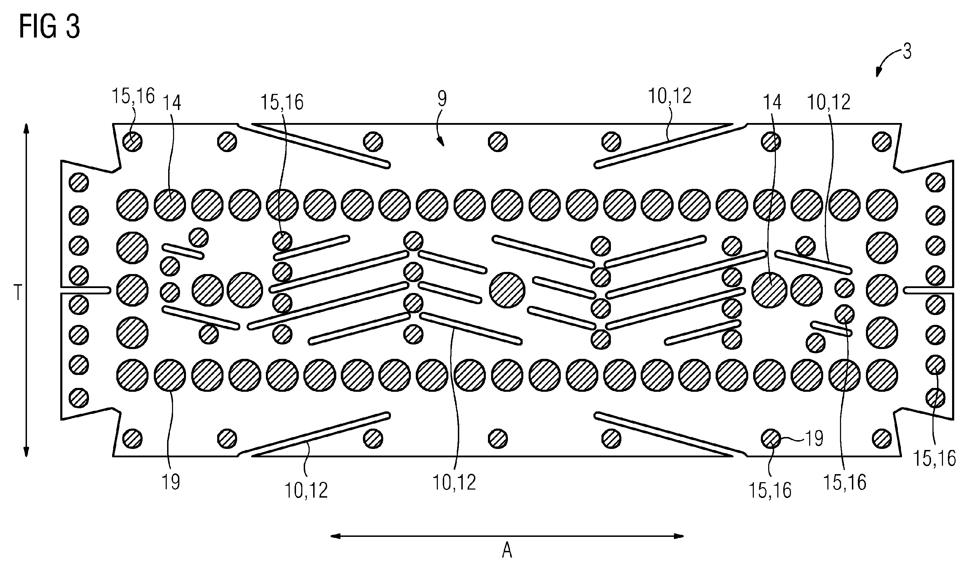

FIG 3 zeigt eine Draufsicht einer ersten Ausführungsform eines Polschuhblechs 9. Das Polschuhblech 9 ist auf dem Rotor 3 montiert, wobei der restliche Rotor 3 aus Gründen der Übersichtlichkeit nicht dargestellt ist. Die Kontur des Polschuhblechs 9 ist an die Kontur der radial äußeren Oberfläche 8a des Polschuhkörpers 8 angepasst und das Polschuhblech 9 liegt vollflächig auf dem Polschuhkörper 8 des Polschuhs 7 auf. Das Polschuhblech 9 weist, insbesondere kreisförmige, Aussparungen 19 für Polschuhschrauben 16 zur Befestigung des Polschuhkörpers 8 an einem Polschaft 5a der Welle 5 auf. Darüber hinaus weist das Polschuhblech 9, insbesondere kreisförmige, Aussparungen 19 für Verbindungselemente 16 auf, welche das Polschuhblech 9 an mehreren Verbindungspunkten 15 mit dem Polschuhkörper 8 verbinden. Sowohl die Aussparungen 19 für die Polschuhschrauben 16 als auch die Aussparungen 19 für die Verbindungselemente 16 sind auf dem Polschuhblech 9 in axiale Richtung A und tangentiale Richtung T angeordnet. Darüber hinaus weist das Polschuhblech 9 eine Profilierung 10 in Form von Schlitzen 12 auf, wobei die Schlitze 12 geradlinig ausgeführt sind und diagonal auf dem Polschuhblech 9 verlaufen. Die Schlitze sind in axiale Richtung im Wesentlichen zwischen den Verbindungspunkten 15 angeordnet. Durch eine derartige Anordnung der Schlitze 12 ist das Polschuhblech 9 zwischen den Verbindungspunkten 15 leichter, insbesondere in axiale Richtung A und tangentiale Richtung T, verformbar.

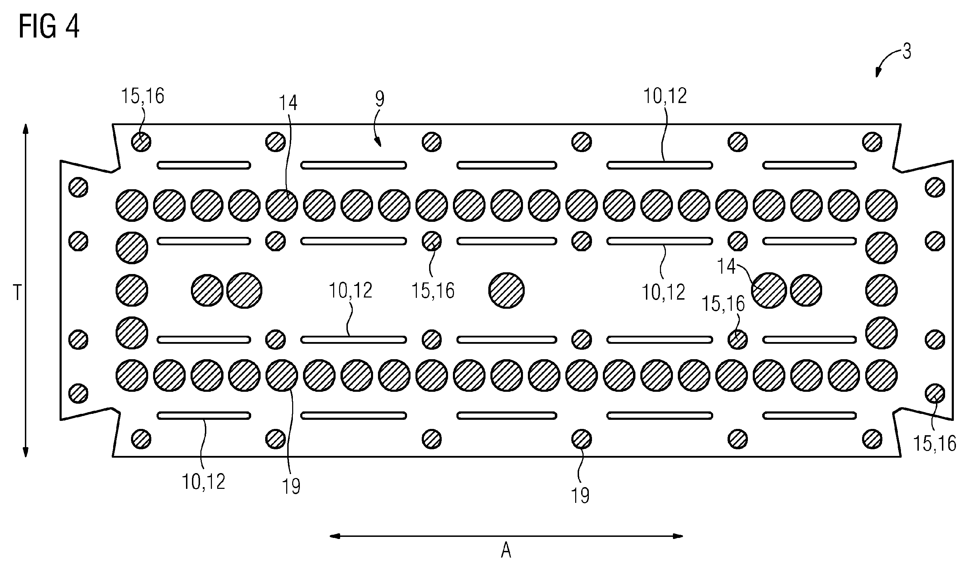

FIG 4 zeigt eine Draufsicht einer zweiten Ausführungsform eines Polschuhblechs 9. Wie in FIG 3 weist das Polschuhblech 9 eine Profilierung 10 in Form von Schlitzen 12 auf. Die geradlinig ausgeführten Schlitze verlaufen in axiale Richtung A und sind zwischen den Verbindungspunkten 15 angeordnet. Durch eine derartige Anordnung der Schlitze 12 ist das Polschuhblech 9 zwischen den Verbindungspunkten 15 leichter, insbesondere in axiale Richtung A und tangentiale Richtung T, verformbar. Die weitere Ausführung des Polschuhblechs 9 entspricht der aus FIG 3.

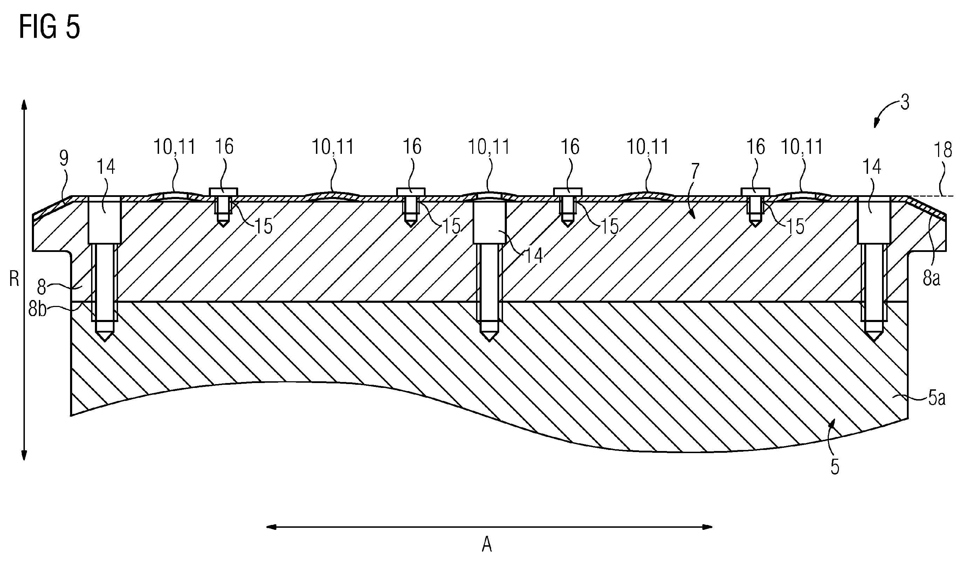

FIG 5 zeigt einen vergrößerten Längsschnitt eines Rotors 3 im Bereich eines Polschuhs 7 mit einer dritten Ausführungsform eines Polschuhblechs 9. Das Polschuhblech 9 weist eine Profilierung 10 auf, welche mehrere Wölbungen 11 umfasst. Die Wölbungen 11 sind, im Verhältnis zu einer Bezugsebene 18, in radiale Richtung R nach außen, das heißt weg vom Polschuh 7, ausgeführt. Darüber hinaus weisen die Wölbungen 11 in tangentiale Richtung T eine konstante oder eine variable Höhe auf. Die Höhe der Wölbungen 11, bezogen auf die Bezugsebene 18, liegt im Bereich von 1 mm bis 10 mm. Durch derartige Wölbungen 11 ist das Polschuhblech 9, beispielsweise durch eine Erwärmung aufgrund von Wirbelströmen, insbesondere in axiale Richtung A, leichter und gezielter verformbar. Die weitere Ausführung des Rotors 3 entspricht der aus FIG 2.

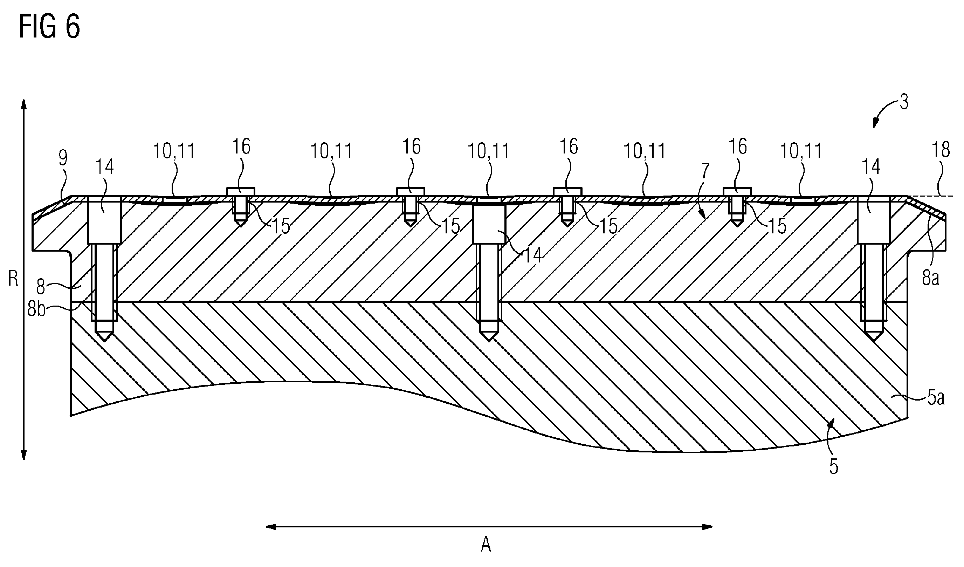

FIG 6 zeigt einen vergrößerten Längsschnitt eines Rotors 3 im Bereich eines Polschuhs 7 mit einer vierten Ausführungsform eines Polschuhblechs 9. Das Polschuhblech 9 weist eine Profilierung 10 auf, welche mehrere, im Verhältnis zu einer Bezugsebene 18, in radiale Richtung R nach innen verlaufende Wölbungen 11 umfasst. Um die Realisierung radial nach innen verlaufender Wölbungen 11 zu ermöglichen, weist die radial äußere Oberfläche 8a des Polschuhkörpers 8 entsprechende Aussparungen auf. Durch derartige radiale nach innen verlaufende Wölbungen 11 wird der Spalt 6 nicht verkleinert und es müssen keine Anpassungen am Stator 2 und am Rotor 3 durchgeführt werden. Die weitere Ausführung des Rotors 3 entspricht der aus FIG 5.

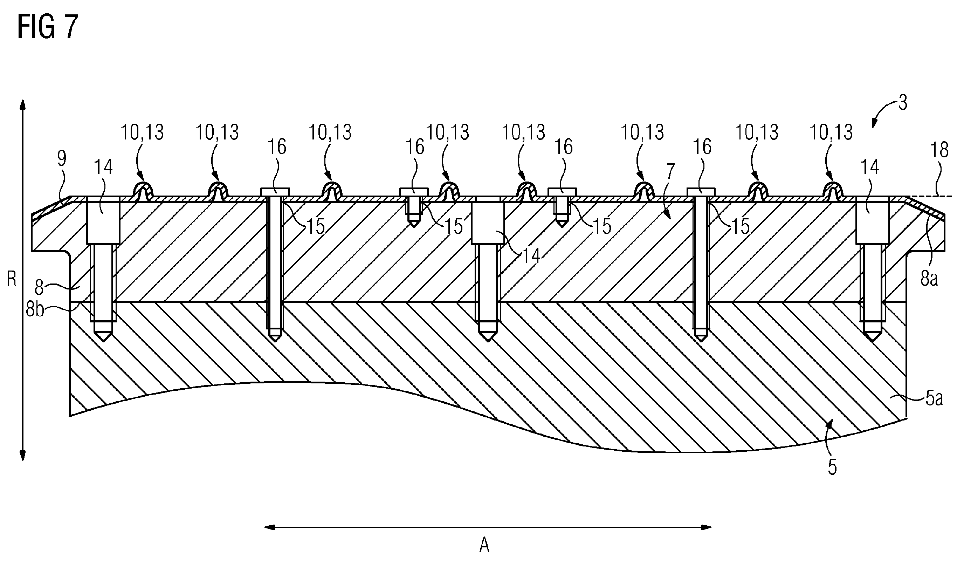

FIG 7 zeigt einen vergrößerten Längsschnitt eines Rotors 3 im Bereich eines Polschuhs 7 mit einer fünften Ausführungsform eines Polschuhblechs 9. Das Polschuhblech 9 weist eine Profilierung 10 auf, welche mehrere Rillen 13 umfasst. Die Rillen 13 sind, im Verhältnis zu einer Bezugsebene 18, in radiale Richtung R nach außen, das heißt weg vom Polschuh 7, ausgeführt. Die Rillen 13 weisen in tangentiale Richtung T eine konstante oder eine variable Höhe auf. Die Höhe der Rillen 13, bezogen auf die Bezugsebene 18, liegt im Bereich von 5 mm bis 25 mm. Durch derartige Rillen 13 ist das Polschuhblech 9, beispielsweise durch eine Erwärmung aufgrund von Wirbelströmen, insbesondere in axiale Richtung A, leichter und gezielter verformbar. Das Polschuhblech 9 weist zusätzlich Verbindungselemente 16 auf, die das Polschuhblech 9 durch den Polschuhkörper 8 direkt mit dem Polschaft 5a verbinden. Die weitere Ausführung des Rotors 3 entspricht der aus FIG 2.

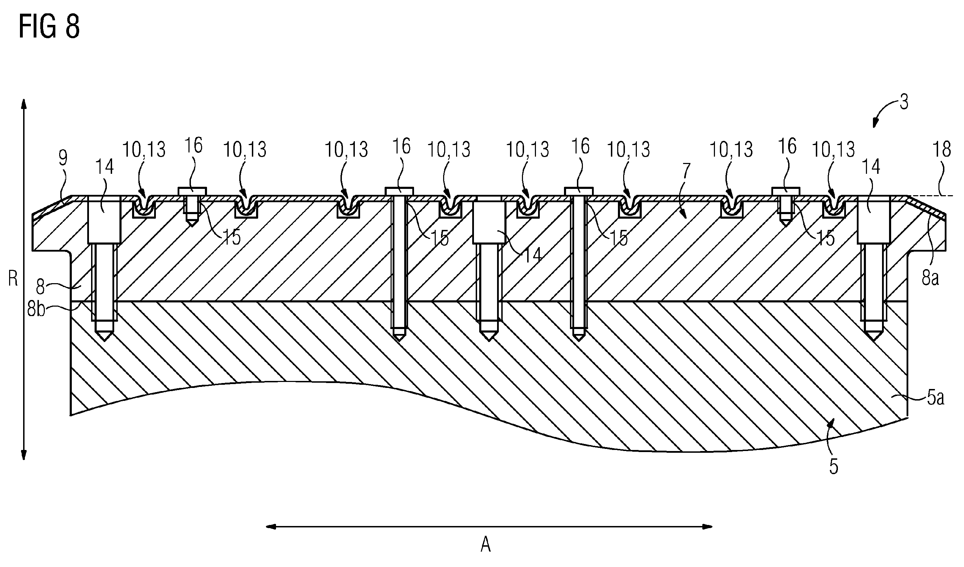

FIG 8 zeigt einen vergrößerten Längsschnitt eines Rotors 3 im Bereich eines Polschuhs 7 mit einer sechsten Ausführungsform eines Polschuhblechs 9. Das Polschuhblech 9 weist eine Profilierung 10 auf, welche mehrere, im Verhältnis zu einer Bezugsebene 18, in radiale Richtung R nach innen verlaufende Rillen 13 umfasst. Um die Realisierung radial nach innen verlaufender Rillen 13 zu ermöglichen, weist die radial äußere Oberfläche 8a des Polschuhkörpers 8 entsprechende Aussparungen auf. Durch derartige radiale nach innen verlaufende Rillen 13 wird der Spalt 6 nicht verkleinert. Die weitere Ausführung des Rotors 3 entspricht der aus FIG 7.

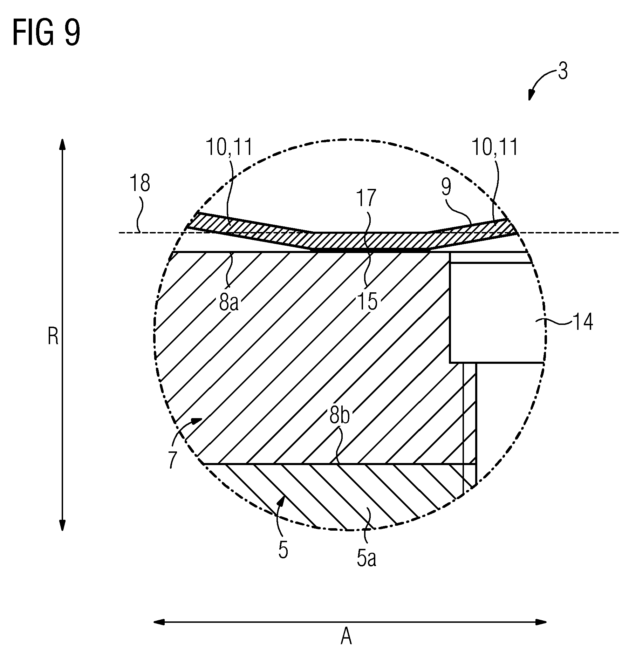

FIG 9 zeigt einen vergrößerten Ausschnitt eines Rotors 3 im Bereich eines Befestigungspunktes 15 mit einer siebten Ausführungsform eines Polschuhblechs 9. Das Polschuhblech 9 weist eine Profilierung 10 auf, welche mehrere Wölbungen 11 umfasst. Das Polschuhblech 9 ist an einem Verbindungspunkt 15 zwischen den Wölbungen 11 über eine stoffschlüssige Verbindung 17 mit der radial äußeren Oberfläche 8a des Polschuhkörpers 8 verbunden. Die stoffschlüssige Verbindung 17 ist als Schweißverbindung ausgeführt.

## Patentansprüche

1. Rotor (3) für eine elektrische rotierende Maschine (1), insbesondere eine Synchronmaschine (1a),
mit einer um eine Rotationsachse (4) rotierbare Welle (5) und mindestens einem Polschuh (7),
**dadurch gekennzeichnet, dass**
der Polschuh (7) einen Polschuhkörper (8) und ein Polschuhblech (9) aufweist,
wobei das Polschuhblech (9) auf einer radial äußeren Oberfläche (8a) des Polschuhkörpers (8) aufliegt.

2. Rotor (3) nach Anspruch 1,
wobei das Polschuhblech (9) an mehreren Verbindungspunkten (15), insbesondere über Verbindungselemente (16) und/oder über eine stoffschlüssige Verbindung (17), mit dem Polschuhkörper (8) verbunden ist.

3. Rotor (3) nach Anspruch 2,
der wobei das Polschuhblech (9) zwischen den Verbindungspunkten (15) zumindest in axiale Richtung (A) flexibel ausgebildet ist.

4. Rotor (3) nach einem der vorherigen Ansprüche,
wobei das Polschuhblech (9) eine Profilierung (10) aufweist.

5. Rotor (3) nach Anspruch 4,
wobei die Profilierung zumindest teilweise gewölbt ausgebildet ist.

6. Rotor (3) nach einem der Ansprüche 4 oder 5,
wobei die Profilierung (10) Schlitze (12) und/oder Löcher aufweist, wobei die Schlitze (12) zumindest in axiale Richtung verlaufen.

7. Rotor (3) nach einem der Ansprüche 4 bis 6,
wobei die Profilierung Rillen (13) aufweist.

8. Rotor (3) nach einem der vorherigen Ansprüche,
wobei das Polschuhblech (9) vollflächig auf der radial äußeren Oberfläche (8a) des Polschuhkörpers (8) aufliegt.

9. Rotor (3) nach einem der vorherigen Ansprüche,
wobei das Polschuhblech (9) aus einem weichmagnetischen Material ausgebildet ist.

10. Rotor (3) nach einem der vorherigen Ansprüche,
wobei das Polschuhblech (9) eine Dicke (d) im Bereich von 1 mm bis 10 mm aufweist.

11. Rotor (3) nach einem der vorherigen Ansprüche,
wobei das Polschuhblech (9) mindestens zwei geschichtete Einzelbleche umfasst.

12. Elektrische rotierende Maschine (1), insbesondere eine Synchronmaschine (1a), mit einem Rotor (3) nach einem der Ansprüche 1 bis 11.

13. Verfahren zur Herstellung eines Rotors (3) nach einem der Ansprüche 1 bis 11.
